# EUROPÄISCHE PATENTSCHRIFT

(11) **EP 0 597 074 B1**
(45) Veröffentlichungstag und Bekanntmachung des Hinweises auf die Patenterteilung: **13.11.1996**
(21) Anmeldenummer: 93912787.4
(22) Anmeldetag: 25.05.1993
(51) Int. Cl.: D04H 13/00

(54) **FLÄCHENGEBILDE, WELCHES FOLIENARTIGES MATERIAL ENTHÄLT UND VERFAHREN ZU SEINER HERSTELLUNG**
FLAT STRUCTURE CONTAINING A FOIL-LIKE MATERIAL AND PROCESS FOR MANUFACTURING THE SAME
STRUCTURE PLATE CONTENANT UN MATERIAU PELLICULAIRE ET SON PROCEDE DE FABRICATION

(30) Priorität: 26.05.1992 DE 4217439; 26.05.1992 DE 4217440; 26.05.1992 DE 4217442
(43) Veröffentlichungstag der Anmeldung: 18.05.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301313
(87) Internationale Veröffentlichungsnummer: WO9324695

(56) Entgegenhaltungen:
- EP-A- 0 388 072
- DE-A- 1 435 762
- FR-A- 1 583 947
- FR-A- 2 198 836
- US-A- 3 952 126

## Beschreibung

Die Erfindung betrifft ein Flächengebilde und ein Verfahren zu seiner Herstellung.

Es ist bekannt, folienartige Schichten aus Kunststoff mit einer Schicht aus nadelbaren Fasern zu bedecken und die Fasern in die Folienbahn hinein- und durch diese hindurchzunadeln. Ein solches Verfahren ist in der DE-A-1 560 651 beschrieben. Das Produkt sollte insbesondere als Dämmschicht unter z.B. einem Bodenestrich benutzt werden. Ein eine derartige Kernschicht enthaltendes Flächengebilde ist relativ hart und unelastisch. Auch die schalldämmenden Eigenschaften liegen hinter denen von anderen Schalldämm-Materialien.

Aus der DE-A-1 435 762 ist ein weiteres mehrschichtiges Flächengebilde mit mindestens einer Deckschicht bekannt, bei dem die Dämmschicht wenigstens teilweise aus passiv nadelfähigen Stoffen in Körner-, Flocken, Schnitzel- oder Streifenform besteht, wie z.B. Korkschrot, Schaumstoffflocken, Papierschnitzeln oder Folienstreifen. Auch ein solches Flächengebilde ist, wenn die Kernschicht Folienstreifen enthält, relativ hart und unelastisch. Die schalldämmenden Eigenschaften liegen auch bei diesem Flächengebilde hinter denen von anderen Schalldämm-Materialien.

Beide bekannten Flächengebilde wurden deshalb auch nie für Dämmschichten benutzt.

Insbesondere durch die Verwendung von Verpackungsmaterial aus Kunststoffolien fällt sehr viel Abfall an. Abfälle aus Kunststoffolien können chemisch oder werkstofflich recycelt werden.

Beim werkstofflichen Recycling wird der Alt-Kunststoff zerkleinert, gereinigt, wieder aufgeschmolzen, regranuliert und anschließend wieder erwärmt zu einem neuen Produkt extrudiert. Da der Alt-Kunststoff in der Regel chemisch aus unterschiedlichen Materialien besteht und diese in einem Gemisch von Abfallkunststoff in der Regel nicht bekannt ist, können aus dem recycelten Material nur minderwertigere oder dickwandige Produkte, wie Mülltonnen, Kunststoffplatten, Baufolien, Mülltüten oder dgl. hergestellt werden.

Beim chemischen Recycling von Alt-Kunststoffen sollen durch Pyrolyse, Hydrierung, Vergasung oder dgl. die Polymere oder Kunststoffe in ihre Raffinerieausgangsstoffe gespalten und als petro-chemische Rohstoffe wieder eingesetzt werden. Chemisches Recycling ist sehr aufwendig.

Materialmäßig uneinheitliche Kunststoffabfälle, wie z.B. aus Papier, Polyethylen und Aluminium bestehende Verpackungen sind bisher verschiedenen Entsorgungsverfahren nur schwer zugänglich. Sie können entweder mit großem Aufwand in ihre Bestandteile Zellstoff, Aluminium und Polyethylen zerlegt werden oder es können derartige Verpackungen zunächst grob oder fein gemahlen und mit Bindemittelzusatz z.B. zu Preßplatten verpreßt werden. Diese Methode ist besonders energieaufwendig. Ein derartiges Verfahren ist z.B. aus der DE-B-1 151 374 oder DE-C-2 905 338 bekannt.

Daneben ist aus der DE-C-3 837 125 bekannt, die Abfälle von mit Metallfolie beschichteten Verpackungsbehältern zu Schnitzeln zu zerkleinern und in den Extruder zwecks Herstellung von Neuprodukten einzufügen. Bei diesem Verfahren handelt es sich ebenfalls um einen komplizierten und energieaufwendigen Entsorgungsvorgang.

Aufgabe der vorliegenden Erfindung ist es, folienartige Abfälle, insbesondere aus Kunststoffen oder kunststoffhaltigen Materialien ökonomisch wieder einzusetzen.

Diese Aufgabe wird durch das im Anspruch 1 angegebene Flächengebilde gelöst. Die Unteransprüche stellen vorteilhafte Ausbildungen dar. Ein Verfahren zur Herstellung des erfindungsgemäßen Flächengebildes ist in den Ansprüchen 10 und 11 angegeben, Verwendungen in der Ansprüchen 12 und 13.

Eine hervorragende Möglichkeit zur Verarbeitung von anfallenden Kunststoffabfällen, insbesondere Kunststoffabfallfolien, ist der Einsatz in dem erfindungsgemäßen Flächengebilde. Da die Folien in der Kernschicht mechanisch durch Vernadeln und, wenn notwendig, anschließendes Walzen verarbeitet werden, spielt deren unterschiedliches Verhalten aufgrund verschiedener Materialien keine wesentliche Rolle. So können verschiedenartige Kunststoffabfallfolien miteinander vermischt werden, meist ohne daß dadurch die Eigenschaften des herzustellenden Flächengebildes nachhaltig beeinträchtigt werden. Wesentlich bei der Herstellung des erfindungsgemäßen Flächengebildes ist, daß das als Abfall vorliegende Material in seiner bisherigen Ausgestaltung, z.B. als folienartiger Kunststoffabfall, sei es in kleineren, sei es in größeren Stücken, auch in Stücken von unregelmäßiger Gestalt eingesetzt werden kann.

Dadurch, daß die Kernschicht des Flächengebildes aus räumlich ausgebildetem Folienmaterial besteht, dessen Schüttvolumen wesentlich größer ist, als das Volumen des ebenen Folienmaterials, weist das erfindungsgemäße Gebilde gute Elastizitätseigenschaften auf und ist volumenreicher, gebrauchsvorteilhafter und beständiger als gattungsgemäße Produkte. Außerdem ist der Herstellungsprozeß bei räumlich ausgebildetem Material vorteilhaft, weil derartiges Material einfacher als ebene Folienstücke auf einer Unterlage aufgeschüttet und seine genaue Menge dosiert werden kann.

Außerdem bilden die Folien durch ihre räumliche Ausbildung ein lockeres Gebilde, insbesondere dann, wenn mehrere Folienlagen aufeinanderliegen, wodurch die Fasern der Deckschicht durch eine größere Fläche und mehr Vernadelungspunkte in einem solchen Material besser verankert werden, als in einem ebenen Folienmaterial. Bei einer dreidimensionalen Ausbildung der Folienstücke erfolgt der Nadeleinstich bzw. die Faserführung unter unterschiedlichen Winkeln, was ebenfalls zur Erhöhung der Einbindefestigkeit der Fasern und somit zur Dauerbeständigkeit des Produktes in einem hohen Maße beiträgt.

Wird ein vernadeltes Flächengebilde anschließend einem Warmwalzprozeß unterzogen, so wird durch den Druck- und Wärmeeinfluß erreicht, daß die Fasern in der Kernschicht von der senkrechten Einstichrichtung mit den ihre Richtung ändernden Folien umgebogen und eingeklemmt werden und deren Einbindung in die Kernschicht noch weiterverbessert wird. Besteht die Kernschicht aus einzelnen Stücken, so ist das Gebilde lockerer und der Nadeleinstich einfacher. Sind die zu verarbeitenden Folienabfälle bereits verformt, z.B. durch Wärme- oder mechanische Einflüsse derart, daß sie räumlich ausgebildet sind, so sind sie ohne weitere Vorbereitung zur Herstellung des erfindungsgemäßen Flächengebildes verwendbar. Außerdem können im wesentlichen flache Folien an einer Vielzahl von über die Fläche verteilten Stellen so gereckt sein, daß Erhebungen entstehen.

In einer vorteilhaften Ausgestaltung sieht die Erfindung vor, daß die Kernschicht aus zellulosehaltigem Material besteht, welches mindestens einseitig eine thermoplastische Beschichtung aufweist, z.B. aus Polyethylen. Derartige Materialien weisen eine besonders hohe Festigkeit auf, insbesondere dann, wenn daraus dünne, faserartige Späne hergestellt werden. Diese Eigenschaften sind insbesondere dann von Bedeutung, wenn auch die Deckschicht aus solchen Stücken hergestellt wird. Sie sind dann aktiv vernadelbar, d.h., daß der Deckschicht Fasern entnommen und durch die Kernschicht und die Trägerschicht durch genadelt werden. Das zellulosehaltige Material kann auch Metallfolien, insbesondere Aluminiumfolien enthalten. Durch die Aluminium-Metallfolie-Kaschierung weist das Material eine höhere Festigkeit auf, die Vernadelbarkeit eines solchen Materials ist ebenfalls besser als die eines Folienmaterials ohne Aluminiumbeschichtung.

In einer vorteilhaften Ausgestaltung sieht die Erfindung vor, daß die Kernschicht aus größeren Stücken besteht und die Deckschicht feingeschnittene , sich dadurch faserartig verhaltende Stücke desselben Materials aufweist, die aktiv nadelfähig sind. Ein solches Flächengebilde weist eine besonders hohe Steifigkeit aus, wobei die feinstrukturierte Deckschicht als Feinfilter und die gröber strukturierte Kernschicht als Grobfilter bei verschiedenen Anwendungen dienen können. Durch die Erweichung und das Schmelzen der thermoplastischen Beschichtung unter Temperatur- und Druckeinfluß beim Herstellungsvorgang des Flächengebildes wird die Verbindung zwischen dem Träger, der Kern- und der Deckschicht weiter verfestigt. Besteht die Deckschicht aus dem gleichen Material wie die Kernschicht, d.h. auch aus einem zellulosehaltigen Material mit einer thermoplastischen Beschichtung, so haben die daraus gezogenen Fäden die gleichen thermoplastischen Eigenschaften wie die Kernschicht, wodurch die Faserverbindung eines solchen Flächengebildes noch zusätzlich verfestigt wird. Bei solchen Flächengebilden können die Nadelstiche in größeren Abständen angeordnet sein, als bei herkömmlichen vernadelten Flächengebilden. Die Deckschicht kann auch aus textilen oder Kunststoffasern, vorzugsweise aus Polypropylen, Polyethylen oder Jutefasern bestehen. Besteht die Kernschicht aus ähnlichen bzw. gleichen Kunststoffen, so ist die Entsorgung solcher Flächengebilde besonders einfach.

Vorteilhaft ist, wenn die Fasern rückseitig der Trägerschicht gebunden sind. Die Bindung kann durch Anschmelzen thermoplastischer Fasern z.B. mit einer heißen Walze, mit einer Bitumenbeschichtung oder durch Verbindung zweier Flächengebilde mit ihren Trägerschichten unter Druck und Temperatureinfluß erreicht werden. Das so hergestellte Flächengebilde hat ein beidseitig gleiches Aussehen.

Ein Verfahren zur Herstellung des erfindungsgemäßen Flächengebildes wird so durchgeführt, daß mindestens eine Lage des die Kernschicht bildenden, räumlich ausgebildeten folienartigen Materials locker auf einer Trägerschicht abgelegt wird, wobei das unvernadelte stückige folienartige Material ein Schüttvolumen aufweist, welches mindestens zweimal, maximal zehnmal so groß ist, wie das Volumen des folienartigen ebenen Ausgangsmaterials. Daraufhin die Kernschicht von einer vernadelbaren Deckschicht abgedeckt und die drei Schichten werden mittels der der Deckschicht entnommenen endlichen oder mittels endlosen Fasern miteinander vernadelt.

Durch einen auf den Vernadelungsprozeß folgenden Warmwalzvorgang wird nicht nur, wie bereits oben erläutert, eine bessere Verankerung der Faser in der Kernschicht erreicht, sondern es ist insbesondere auch möglich, das Gebilde ganz oder teilweise zu verdichten.

Werden zwei Flächengebilde flächig miteinander verbunden, kann zwischen die beiden Flächengebilde eine skelettartige, versteifende Schicht z.B. aus Draht oder Streckmetall eingelegt werden. Dadurch wird die Dauerverformbarkeit des erfindungsgemäßen Flächengebildes erhöht. Seine Formstabilität ist bereits nach dem Vernadelungsvorgang so gut, daß das Flächengebilde in weiteren Umformverfahren, wie z.B. einem Tiefziehprozeß umgeformt werden kann. Aus einem so verformten Flächengebilde können Formteile wie z.B. Reisekofferschalen hergestellt werden. Die in einem Warmwalzvorgang verfestigten erfindungsgemäßen Flächengebilde können auch tiefgezogen werden.

Das erfindungsgemäße Flächengebilde kann als Verpackungsmaterial, Isoliermaterial, Wandbelag, Bodenbelag oder Träger für einen Teppichbelag, insbesondere als Träger für einen Tuftingteppich verwendet werden. Als Isoliermaterial eignen sich die erfindungsgemäßen Flächengebilde insbesondere im Bauwesen oder als schwimmender Estrich. Bei der Verwendung als Tuftingträger ist es von besonderem Vorteil, daß für die Befestigung der Tuftingfäden im Tuftingträger kein Latex notwendig ist, da die Fäden durch einen Warmwalzvorgang in dem erfindungsgemäßen Flächengebilde befestigt werden können.

Ein Ausführungsbeispiel der Erfindung ist in den nachfolgenden Figuren dargestellt.

Es zeigen:
- Fig. 1:: eine schematische Darstellung einer Anlage zur Herstellung des erfindungsgemäßen vernadelten Flächengebildes;
- Fig. 2:: eine schematische Darstellung einer vernadelten Kernschicht;
- Fig. 3:: eine schematische Darstellung der vernadelten Kernschicht der Figur 2 nach dem Walzvorgang, und
- Fig. 4:: eine schematische Darstellung eines vernadelten Flächengebildes mit einer aus streifenförmigen Stücken bestehenden Kernschicht.

Eine Anlage zur Herstellung des erfindungsgemäßen vernadelten Flächengebildes weist eine Austragsvorrichtung 1, eine Fördervorrichtung 2 und eine Walzvorrichtung 3 auf. Die von der Austragsvorrichtung 1 abgegebenen Folienstücke oder Folienstreifen 4 werden auf einem Träger 5 vorzugsweise in mehreren Lagen abgelegt. Eine so entstandene Kernschicht 6 wird durch eine aktive Vernadelungsfasern enthaltende Oberschicht 7 abgedeckt. Die Oberschicht 7 kann aus textilen Fasern, aus Kunststoffasern oder aus feingeschnittenem zellulosehaltigen, mindestens einseitig thermoplastisch beschichteten und Metallfolien enthaltenden Material bestehen.

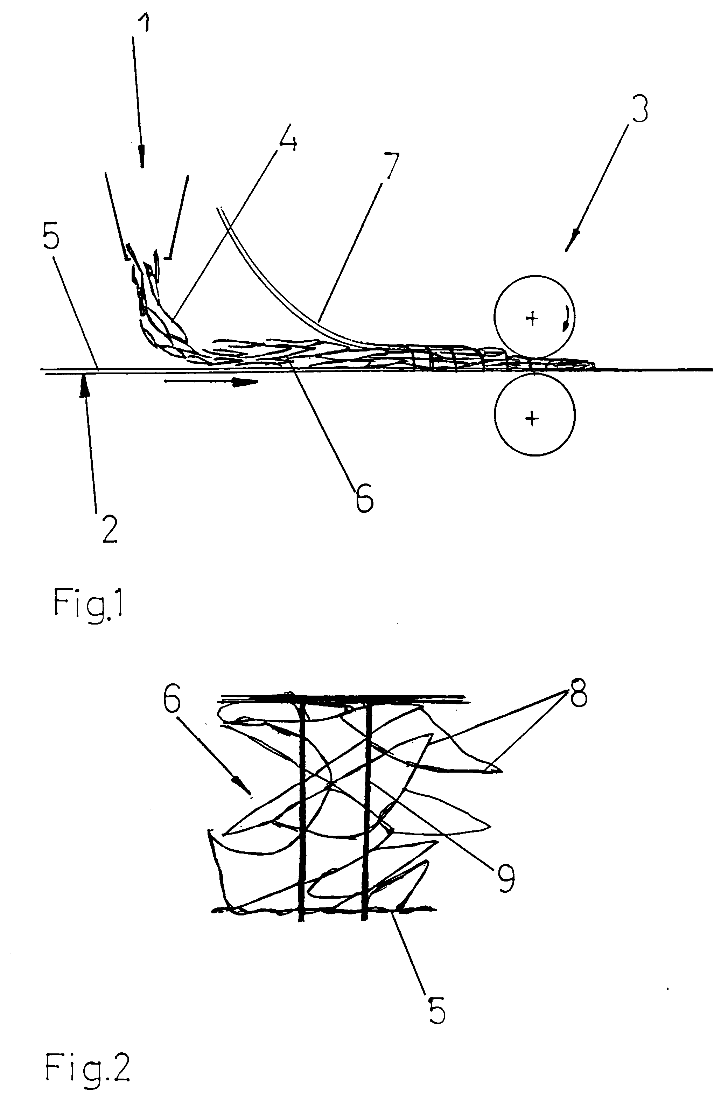

Die Kernschicht 6 wird durch einen Vernadelungsvorgang mit der Oberschicht 7 entnommenen Fasern 9 mit dem Träger 5 vernadelt. Eine schematische Darstellung der vernadelten Kernschicht 6 ist der Figur 2 entnehmbar. Die Kernschicht 6 bildenden räumlich ausgebildeten Folienstücke 8 bilden ein lockeres Gebilde, das durch die Nadeln und die Fasern 9 der Oberschicht 7 besonders gut durchdrungen werden kann. Die senkrechte Durchnadelungsrichtung und der Verlauf der Fasern 9 ist aus der Figur 2 deutlich ersichtlich.

Das so vernadelte Flächengebilde durchläuft anschließend die Walzvorrichtung 3, in der es vorzugsweise von der Trägerseite aus erwärmt wird. Die Fasern 9 werden dadurch nicht temperaturbeschädigt. Dadurch erweichen die Folien 8 der Kernschicht 6 und backen zusammen. Dieser Effekt wird zusätzlich durch die Druckeinwirkung der Walzenstrecke 3 unterstützt. Die Folienstücke 8 werden durch den Walzprozeß so weit verdichtet, daß die Kernschicht 6 ein kompaktes Gebilde darstellt, in dem in einem im wesentlichen einheitlichen Folienmaterial 10 die Fasern 9 fest verankert sind. Sie sind praktisch aus dem fertigen Flächengebilde nicht mehr herausziehbar.

Ein Beispiel soll die Materialzusammensetzung eines erfindungsgemäßen Flächengebildes näher erläutern: Die Größe der Folienstücke beträgt etwa 15 mm mal 40 mm, und ihre Dicke ca. 20 µm bis 50 µm. Die Stücke werden übereinandergelegt, so daß eine Schicht von etwa 1.000 g/m³ entsteht. Dabei wird eine Schichtdicke von etwa 15 bis 35 mm gebildet. Diese Kernschicht weist nach dem Vernadeln eine Dicke von 5 bis 6 mm auf und ergibt eine Enddicke des fertigen Produktes von 2 bis 3 mm bei einer Erwärmung der Polyethylenfolie auf ca. 120 °C.

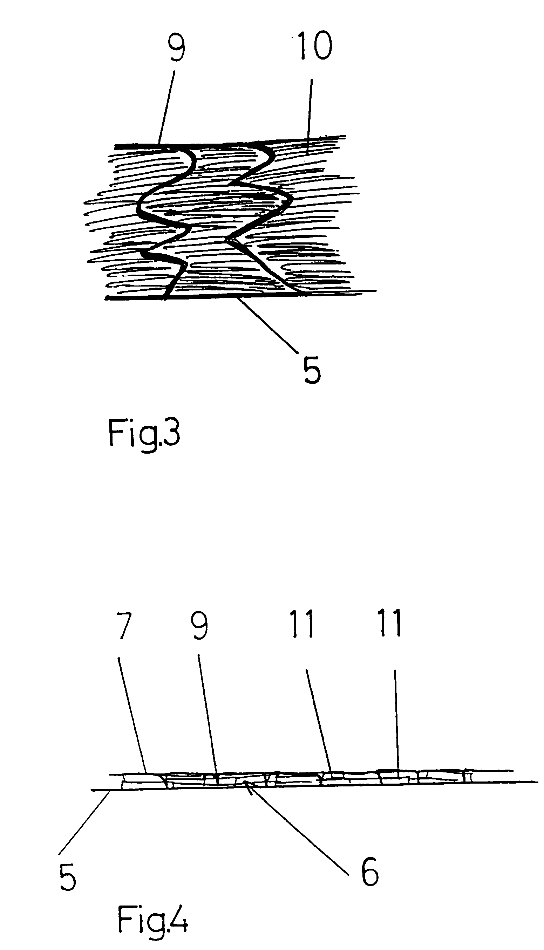

In Figur 4 ist ein vernadeltes Flächengebilde dargestellt, bei dem die Kernschicht 6 aus folienartigen Streifen 11 aus einem zellulosehaltigen Material besteht. Die Materialstreifen 11 sind mit dem Träger 5 durch die der Oberschicht 7 entnommenen Fasern 9 vernadelt. Bei einem derartigen Flächengebilde tritt noch der Vorteil auf, daß die folienartigen Materialstreifen 11 durch ihre thermoplastische Beschichtung sehr gut bei dem Warmwalzprozeß in der Walzvorrichtung 3 mit dem Träger 5 und untereinander verbunden werden. Besteht die Oberschicht 7 aus gleichem Material wie die Streifen 11, so entsteht ein Gebilde mit einer besonders hohen Festigkeit.

## Patentansprüche

1. Flächengebilde, bei dem stückiges, folienartiges Material (8) als Kernschicht (6) zwischen einer Deckschicht (7) aus faserartigem Material und einer Trägerschicht (5) vernadelt ist, dadurch gekennzeichnet, daß das stückige folienartige Material (8) räumlich ausgebildet ist und das unvernadelte stückige folienartige Material (8) ein Schüttvolumen aufweist, welches mindestens zweimal, maximal zehnmal so groß ist, wie das Volumen des folienartigen ebenen Ausgangsmaterials.

2. Flächengebilde nach Anspruch 1, dadurch gekennzeichnet, daß das folienartige Material (8) in der Kernschicht (6) aus thermoplastischem Kunststoff besteht.

3. Flächengebilde nach einem der vorhergehenden Ansprüche, dadurch gekennzeichnet, daß das räumlich ausgebildete Kernschicht-Folienmaterial (8) aus Folienabfällen besteht.

4. Flächengebilde nach einem der vorhergehenden Ansprüche, dadurch gekennzeichnet, daß die Vernadelungsfasern (9) der Deckschicht entnommene endliche oder praktisch endlose Fasern sind.

5. Flächengebilde nach Anspruch 1, dadurch gekennzeichnet, daß die Kernschicht (6) aus mindestens einseitig mit einer thermoplastischen Beschichtung versehenen zellulosehaltigen stückigen Material (11) besteht.

6. Flächengebilde nach Anspruch 5, dadurch gekennzeichnet, daß das zellulosehaltige Material (11) Aluminiumfolien aufweist.

7. Flächengebilde nach einem der vorhergehenden Ansprüche, dadurch gekennzeichnet, daß die Deckschicht (7) aus faserartigen Stücken aus mindestens einseitig mit einer thermoplastischen Beschichtung versehenen zellulosehaltigem Material besteht.

8. Flächengebilde nach einem der vorhergehenden Ansprüche, dadurch gekennzeichnet, daß die Fasern (9) rückseitig der Trägerschicht (5) gebunden sind.

9. Flächengebilde nach Anspruch 8. dadurch gekennzeichnet, daß zwei Flächengebilde mit ihren Trägerschichten (5) unter Druck und Temperatur miteinander verbunden sind.

10. Verfahren zur Herstellung eines vernadelten Flächengebildes nach einem der vorhergehenden Ansprüche, dadurch gekennzeichnet, daß mindestens eine Lage des die Kernschicht (6) bildenden, räumlich ausgebildeten folienartigen Materials (8, 11) locker auf einer Trägerschicht (5) abgelegt, wobei das unvernadelte stückige folienartige Material (8) ein Schüttvolumen aufweist, welches mindestens zweimal, maximal zehnmal so groß ist, wie das Volumen des folienartigen ebenen Ausgangsmaterials, von einer vernadelbaren Deckschicht (7) abgedeckt wird und die drei Schichen (5, 6, 7) mittels der Deckschicht entnommenen endlichen oder praktisch endlosen Fasern (9) miteinander vernadelt werden.

11. Verfahren nach Anspruch 10, dadurch gekennzeichnet, daß das vernadelte Flächengebilde anschließend zwischen zwei Walzen (3) unter Temperatureinfluß verdichtet oder teilverdichtet wird.

12. Verwendung des Flächengebildes nach einem der Ansprüche 1 bis 9 als Geovlies-Ersatz.

13. Verwendung des Flächengebildes nach einem der Ansprüche 1 bis 4 als Träger für einen Tufting-Teppich.

## Claims

1. A flat structure in which foil-like material (8) in piece form is needled as a core layer (6) between a cover layer (7) of fibre-like material and a support layer (5), characterised in that the foil-like material (8) in piece form is of a three-dimensional configuration and the unneedled foil-like material (8) in piece form has a bulk volume which is at least twice and at most ten times as great as the volume of the foil-like flat starting material.

2. A flat structure according to claim 1 characterised in that the foil-like material (8) in the core layer (6) comprises thermoplastic material.

3. A flat structure according to one of the preceding claims characterised in that the core layer foil material (8) of three-dimensional configuration comprises foil scraps.

4. A flat structure according to one of the preceding claims characterised in that the needling fibres (9) are finite or practically endless fibres which are taken from the cover layer.

5. A flat structure according to claim 1 characterised in that the core layer (6) comprises cellulose-bearing material (11) in piece form which is provided at least on one side with a thermoplastic coating.

6. A flat structure according to claim 5 characterised in that the cellulose-bearing material (11) has aluminium foils.

7. A flat structure according to one of the preceding claims characterised in that the cover layer (7) comprises fibre-like pieces comprising cellulose-bearing material provided at least on one side with a thermoplastic coating.

8. A flat structure according to one of the preceding claims characterised in that the fibres (9) are bonded at the rear side of the support layer (5).

9. A flat structure according to claim 8 characterised in that two flat structures are connected together with their support layers (5) under pressure and temperature.

10. A process for producing a needled flat structure according to one of the preceding claims characterised in that at least one layer of the foil-like material (8, 11) which is of a three-dimensional configuration and which forms the core layer (6) is deposited loosely on a support layer (5), the unneedled foil-like material (8) in piece form being of a bulk volume which is at least twice and at most ten times as great as the volume of the foil-like starting material, it is covered by a needleable cover layer (7) and the three layers (5, 6, 7) are needled together by means of finite or practically endless fibres (9) which are taken from the cover layer.

11. A process according to claim 10 characterised in that the needled flat structure is then compacted or partially compacted between two rollers (3), under the influence of temperature.

12. Use of the flat structure according to one of claims 1 to 9 as a geofleece substitute.

13. Use of the flat structure according to one of claims 1 to 4 as a support for a tufted carpet.

## Revendications

1. Structure plate, dans laquelle du matériau pelliculaire en morceaux (8) est assemblé par piquage, sous forme de couche de noyau (6), entre une couche de recouvrement (7) en matériau fibreux et une couche de support (5), caractérisée par le fait que le matériau pelliculaire en morceaux (8) se présente de forme spatiale et que le matériau pelliculaire en morceaux (8) non piqué présente un volume apparent qui d'au moins deux fois, tout au plus dix fois, aussi grand que le volume du matériau pelliculaire lisse de départ.

2. Structure plate suivant la revendication 1, caractérisée par le fait que le matériau pelliculaire (8) dans la couche de noyau (6) se compose de matière synthétique thermoplastique.

3. Structure plate suivant l'une des revendications précédentes, caractérisée par le fait que le matériau pelliculaire (8) de la couche de noyau se présentant de forme spatiale se compose de déchets de films.

4. Structure plate suivant l'une des revendications précédentes, caractérisée par le fait que les fibres de piquage (9) sont des fibres d'extrémité prélevées de la couche de recouvrement ou des fibres pratiquement continues.

5. Structure plate suivant la revendication 1, caractérisée par le fait que la couche de noyau (6) se compose d'un matériau en morceaux (11) à teneur en cellulose pourvu, au moins d'un côté, d'un revêtement thermoplastique.

6. Structure plate suivant la revendication 5, caractérisée par le fait que le matériau (11) à teneur en cellulose présente des films d'aluminium.

7. Structure plate suivant l'une des revendications précédentes, caractérisée par le fait que la couche de recouvrement (7) se compose de morceaux fibreux d'un matériau à teneur en cellulose pourvu, au moins d'un côté, d'un revêtement thermoplastique.

8. Structure plate suivant l'une des revendications précédentes, caractérisée par le fait que les fibres (9) sont assemblées du côté arrière de la couche de support (5).

9. Structure plate suivant la revendication 8, caractérisée par le fait que deux structures plates sont assemblées l'une à l'autre, par leurs couches de support (5), sous pression et température.

10. Procédé de fabrication d'une structure plate piquée suivant l'une des revendications précédentes, caractérisé par le fait qu'au moins une couche du matériau pelliculaire (8, 11) se présentant de forme spatiale et constituant la couche de noyau (6) est déposée de manière non-serrée sur une couche de support (5), le matériau pelliculaire en morceaux (8) non piqué présentant un volume apparent qui d'au moins deux fois, tout au plus dix fois, aussi grand que le volume du matériau pelliculaire lisse de départ, étant recouvert d'une couche de recouvrement (7) pouvant être piquée et les trois couches (5, 6, 7) étant assemblées l'une à l'autre par piquage à l'aide de fibres d'extrémité prélevées de la couche de recouvrement ou de fibres (9) pratiquement continues.

11. Procédé suivant la revendication 10, caractérisé par le fait que la structure plate piquée est ensuite compactée ou partiellement compactée entre deux cylindres (3), sous l'effet de la température.

12. Utilisation de la structure plate suivant l'une des revendications 1 à 9 comme substitut de géovoile.

13. Utilisation de la structure plate suivant l'une des revendications 1 à 4 comme support d'un tapis plein.
